(19)

Europäisches
Patentamt
European
Patent Office
Office européen
des brevets

(11) **EP 2 748 935 B1**

(12) **EUROPEAN PATENT SPECIFICATION**

(45) Date of publication and mention
of the grant of the patent:
**30.11.2016 Bulletin 2016/48**

(21) Application number: **11748649.8**

(22) Date of filing: **24.08.2011**

(51) Int Cl.:
*H04B 3/32* *(2006.01)*　　　*H04L 5/00* *(2006.01)*
*H04L 25/03* *(2006.01)*

(86) International application number:
**PCT/EP2011/064533**

(87) International publication number:
**WO 2013/026479 (28.02.2013 Gazette 2013/09)**

(54) **ADJUSTED TRANSMISSION IN XDSL**

ANGEPASSTE ÜBERTRAGUNG IN XDSL

TRANSMISSION AJUSTÉE SUR XDSL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.07.2014 Bulletin 2014/27**

(73) Proprietor: **Telefonaktiebolaget LM Ericsson
(publ)
164 83 Stockholm (SE)**

(72) Inventors:
• **LU, Chenguang
S-191 34 Sollentuna (SE)**

• **BERG, Miguel
S-194 67 Upplands Väsby (SE)**
• **ERIKSSON, Per-Erik
S-116 37 Stockholm (SE)**
• **JOHANSSON, Albin
S-931 62 Skellefteå (SE)**

(74) Representative: **Ericsson
Patent Development
Torshamnsgatan 21-23
164 80 Stockholm (SE)**

(56) References cited:
**US-A1- 2006 056 499　　US-B1- 7 142 501**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The invention relates to a method and transmitting node in a DSL (Digital Subscriber Line) system, in particular to adjusting the transmission on one or more of the DSL lines.

**BACKGROUND**

DSL technologies provide a cost-effective broadband access solution by reusing the existing infrastructure of POTS (Plain Old Telephone Service) networks. Thus, DSL technologies have come to dominate the broadband access market.

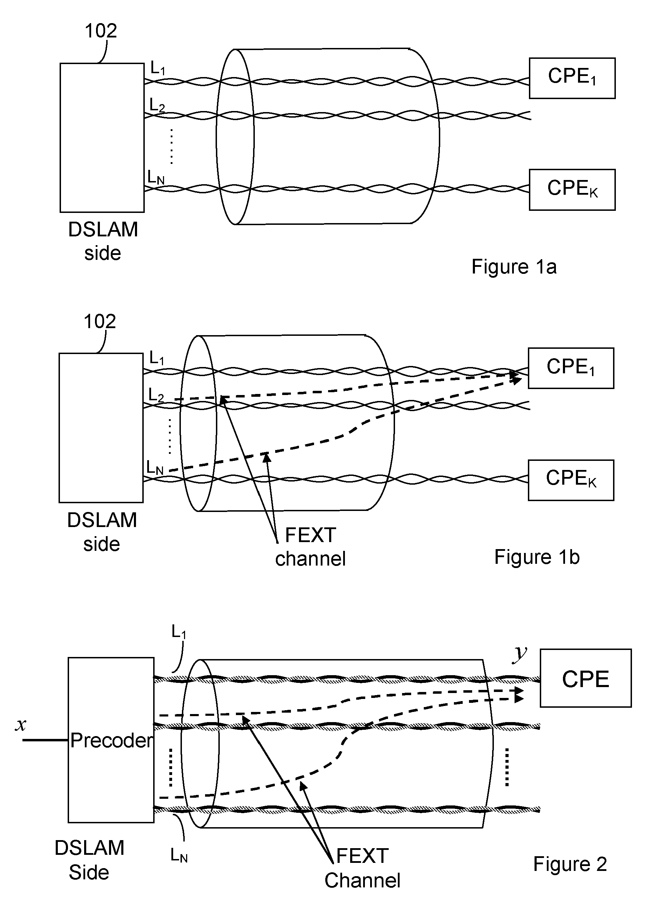

Figure 1a is a schematic view of a basic DSL system comprising N lines. A line is typically a twisted pair of copper wires. At the DSLAM (Digital Subscriber Line Access Multiplexer) side, a transceiver node 102 is connected to a respective first end of the N lines. The respective other end of the lines is typically connected to a so-called CPE or similar communication equipment.

The performance of DSL systems is limited by line attenuation and crosstalk. In figure 1 b, FEXT (Far End cross-Talk) is illustrated as a dashed line from one line to another line. Basically, the reach (e.g. in meters) is mainly limited by line attenuation, while the capacity (e.g. in bits/s) is mainly limited by crosstalk from neighboring lines.

The work on further improving the performance of DSL systems is constantly in progress. For example, the use of the recently approved vectoring recommendation, ITU-T G.993.5, enables that crosstalk between DSL lines can be efficiently canceled, which may entail a significant improvement of DSL line capacity.

A new standardization work, ITU-T "G.fast", has been started in order to enable DSL service from a last distribution point which is located as far as 200 meters away from a user. Within the work on G.fast it is considered to use frequencies of up to 300 MHz, which is higher than for example in current VDSL2

(Very-high-bitrate DSL) systems, where only frequencies of up to 30 MHz are used.

US patent document US7142501 B1 deals with an apparatus for eliminating near end cross talk in a DSL system. US patent application US20060056499 shows a multi-pair broadband transmission system in which far end cross talk is used to increase a received signal strength at a receiving node.

**SUMMARY**

It would be desirable to improve the performance of xDSL systems in terms of e.g. reach and capacity. It is an object of the invention to enable improved xDSL system performance.

According to a first aspect, a method is provided in a transmitting node connected to a respective first end of a first and a second digital subscriber line, where the second end of the first line is connected to a first receiving node. The method comprises transmitting a first signal A1 on the first line, and transmitting a second signal A2 on the second line, the second signal A2 being related to the first signal A1. The method further comprises adjusting the transmission of the second signal A2 on the second line, such that a contribution from the second signal A2 interferes constructively with a signal A1' at the second end of the first line, where the signal A1' represents the signal A1 having propagated through the first line. The method further comprises galvanically connecting or non-galvanically coupling the first line with the second line.

According to a second aspect, a transmitting node for digital subscriber lines is provided. The transmitting node is connectable to a respective first end of at least a first and a second digital subscriber line. The transmitting node comprises a transmitting unit, adapted to transmit a first signal A1 on the first line; and to transmit a second signal A2 on the second line, where the second signal A2 is related to the first signal A1. The transmitting node further comprises an adjusting unit, adapted to adjust the transmission of the second signal A2 on the second line such that a contribution from the second signal A2 interferes constructively with a signal A1' at the second end of the first line, where the signal A1' represents the signal A1 having propagated through the first line. The transmitting node is further arranged to galvanically connect or non-galvanically couple the first line with the second line.

The above method and transmitting node may be used for extending the reach and improving the capacity on the lines which are subjected to/provided with constructive contributions from one or more neighboring DSL lines. Spare DSL lines could be used for creating constructive interference to other DSL lines. For example, in some countries, the POTS network comprises two DSL lines to each potential subscriber, of which one line is typically idle. Further, DSL lines which are e.g. connected to another receiving node, but which are not presently used, or only used in a certain frequency band, could be used for creating constructive interference to other DSL lines in frequencies currently unused by a DSL or POTS customer.

The above method and transmitting node may be implemented in different embodiments. In most embodiments the contribution from the second signal A2 is crosstalk related to the second signal A2 from the second line to the first line. The adjusting may be performed by use of precoding. The second signal may be transmitted on/using one or more subcarriers, and may comprise the same information or data, or at least part thereof, as the first signal on the corresponding respective subcarriers

Further, the second end of the second line could e.g. be connected to a second receiving node or be idle. The adjusting of the transmission of the second signal A2 on the second line could be based on feedback received from the first receiving node, and/or upstream communication from the first receiving node.

Unwanted crosstalk to the first DSL line from one or more other DSL lines could be cancelled by use of vectoring.

The embodiments above have mainly been described in terms of a method. However, the description above is also intended to embrace embodiments of the transmitting node, adapted to enable the performance of the above described features. The different features of the exemplary embodiments above may be combined in different ways according to need, requirements or preference.

## BRIEF DESCRIPTION OF THE DRAWINGS

The invention will now be described in more detail by means of exemplifying embodiments and with reference to the accompanying drawings, in which:

Figure 1 a is a schematic view illustrating a basic DSL system.

Figure 1 b is a schematic view illustrating FEXT in a basic DSL system.

Figure 2 is a schematic view of a DSL system where FEXT is utilized in accordance with an exemplifying embodiment.

Figure 3 is a schematic view of a DSL system comprising a transmitting node according to an exemplifying embodiment.

Figure 4a-6 are schematic views illustrating multiple parallel coherent transmission systems in accordance with exemplifying embodiments.

Figure 7 is a schematic view illustrating a device for increasing the coupling between lines.

Figure 8a is a diagram showing the magnitude in dB of a direct channel of a first line and crosstalk (FEXT) channels from other lines to the first line, where all lines have a respective loop length of 200 meters.

Figure 8b is a diagram showing the SNR for single line transmission as compared to that of coherent transmission, according to an exemplifying embodiment, over a different number of lines.

Figure 9 is a diagram illustrating capacity (bit rate) versus reach (loop length) for single line transmission and coherent transmission over a different number of lines.

Figure 10 is a flow chart illustrating the actions in a procedure in a transmitting node according to an exemplifying embodiment.

Figures 11-12 are block diagrams illustrating a transmitting node according to exemplifying embodiments.

## DETAILED DESCRIPTION

Briefly described, a solution is presented where contributions/interference from information transmitted on one or more neighboring DSL lines is utilized for increasing the received signal power of a desired signal at a receiver connected to a certain DSL line.

Crosstalk between DSL lines is normally considered to be a problem, since the desired signal on each line is degenerated by such crosstalk. Therefore, much effort has been spent over the years on finding solutions for mitigation or cancellation of crosstalk between DSL lines. For example, as previously mentioned, so-called vectoring is a recommended solution for cancellation of crosstalk between DSL lines.

However, in this description, the property of crosstalk channels between DSL lines is exploited and utilized for increasing the received signal power of a desired signal on a line of interest, and thus enhancing said desired signal. This is achieved by that respective signals carrying, at least partly, the same data are transmitted both on a DSL line of interest and on a neighboring DSL line in such a way that the signal from the direct channel of the DSL line of interest and the signal carrying the same data from the crosstalk channel of said neighboring DSL line to the DSL line of interest are received constructively at a receiver connected to the DSL line of interest. Such a signal from a crosstalk channel will henceforth be referred to as "constructive crosstalk". The signal carrying the same data is transmitted on at least one subcarrier (or tone) on the neighboring DSL line. The concept is not limited to use of only one neighboring DSL line for constructive crosstalk contribution to a DSL line of interest. The more constructive crosstalk contributions from other DSL lines, the more power gain to a desired signal on the DSL line of interest.

In other words, in order to achieve constructive crosstalk to a DSL line, $L_D$, of interest, the desired information/data that is transmitted on $L_D$, or parts thereof, is also to be transmitted on at least one other DSL line, $L_O$. The transmission on the at least one other DSL line, $L_O$, is further to be adjusted such that the crosstalk signal(s) from $L_O$ to $L_D$, and a desired direct signal transmitted over $L_D$ are in phase/coherent, and thus add constructively, at a receiver connected to $L_D$. Alternatively, for a two line case (one $L_O$-line), the transmission on $L_D$ could be adjusted to add constructively with the crosstalk from $L_O$, or, the respective transmission on both lines could be adjusted to add constructively at the receiver connected to $L_D$.

It should be noted that the transmission technique used in the DSL systems discussed above is assumed to be OFDM/DMT, and that transmission may be performed on any set or sub-set of the plurality of subcarriers/tones. Thus, constructive crosstalk could be achieved for a selected set of tones, e.g. one, a few, several or all of the tones used for transmission on line $L_D$ and available for transmission on line(s) $L_O$. The signal modulated on a tone on line $L_O$ in order to create constructive crosstalk to a corresponding tone on line $L_D$ is preferably a scaled version of the signal on the corresponding tone on $L_D$. That is, the data to be transmitted on a certain tone on line $L_O$ in order to create constructive crosstalk is a copy of the data transmitted on the corresponding tone on $L_D$, which copy is subjected to a multiplication with a complex scaling factor prior to transmission.

As described above, the more constructive crosstalk contributions from other DSL lines $L_O$, the more power gain to a desired signal on a DSL line of interest $L_D$. Thus, in contrast to traditional DSL deployment, it may in some cases be desired to artificially increase coupling between lines e.g. by using galvanic connection or non-galvanic coupling (inductive, capacitive etc). An example of galvanic connection is to connect two lines in parallel at the CPE side. Further, an example of non-galvanic coupling is to connect two lines using a transformer. The transformer may have multiple primary windings where the different lines from the DSLAM side can be connected and at least one secondary winding where the line from the CPE side is connected. A device for artificial coupling enhancement may also include means for impedance matching since large impedance mismatches will decrease the power gain.

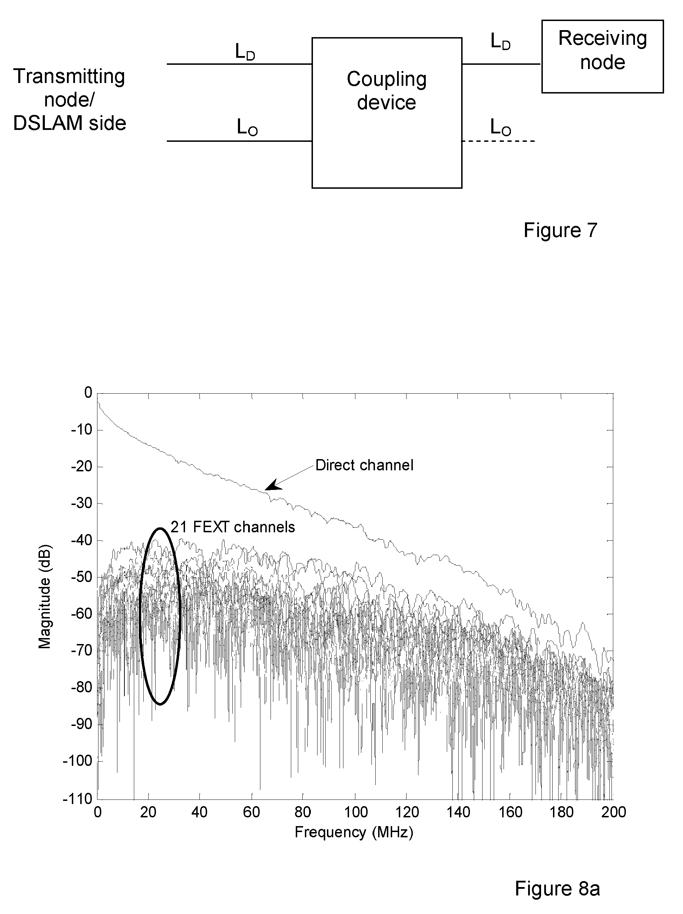

Examples of DSL arrangements with artificially increased coupling between lines could be e.g. when "another" DSL line $L_O$ is in fact physically connected to/twined with the DSL line $L_D$, or, if $L_O$ and $L_D$ are connected through some coupling device, in or near the end where the signals are to add constructively, as previously described. The contribution from $L_O$ to $L_D$ in such arrangements could be regarded as "full crosstalk", and the adjusting of the transmission over $L_O$ could be performed as if the (major) contribution from $L_O$ to $L_D$ was substantial crosstalk, even though it in fact propagates through a galvanic connection or other type of coupling device as shown in figure 7. In figure 7, $L_O$ is illustrated by a dashed line on the receiving-node-side of the coupling device to illustrate that $L_O$ may terminate in the coupling device.

For an N -line DSL system, as exemplified in figure 2, assuming that "line 1 ", $L_1$, is the line of interest, where a CPE is connected to one end (the "Far End") of $L_1$, the received signal at one tone at the CPE side can be modelled as

$$y = \mathbf{h}^T \mathbf{p} x + n \qquad (1)$$

where $x$ denotes the transmitted signal before the precoder;
$\mathbf{p} = [p_1\ p_2\ ...\ p_N]^T$ is the precoder vector in which $p_i$ is the precoding coefficient for the signal transmitted on line $i$ ;
$\mathbf{h} = [h_{11}\ h_{12}\ ...\ h_{1N}]^T$ denotes the channel vector in which $h_{1i}$ is the channel coefficient from line $i$ to line 1, and n denotes the noise at the CPE side. By noise is here meant unwanted distortion, such as thermal noise, Radio Frequency Interference (RFI) and/or undesired crosstalk from "alien" DSL systems/lines. The constructive crosstalk is not comprised in the noise term n.

To maximize the received signal strength at the CPE, and thus e.g. the possible bit rate, a Maximum Ratio Combining (MRC) technique is used to precode the signals. By precoding is meant that certain weights or operators are assigned to the transmission over the different tones of the different DSL lines, which weights may be expressed in a vector or matrix denoted a precoding vector or matrix. The ith coefficient of the MRC precoding vector can be expressed as

$$p_i = \frac{h_{1i}^{*}}{\mid h_{1i} \mid} \tag{2}$$

With MRC precoding in accordance with (2), the received signal may be expressed as:

$$y = \sum_i \mid h_{1i} \mid x + n \tag{3}$$

Then, the power gain at the CPE side with respect to single line transmission over L1 can be expressed as:

$$g = \frac{(\sum_i \mid h_{1i} \mid)^2}{\mid h_{11} \mid^2} \tag{4}$$

It can be seen in (4), that the stronger the crosstalk channel is and the higher the number of lines used, the higher power gain can be achieved. It should be noted that the power gain, in fact, can exceed the increase in transmit power. For example, if the crosstalk channel is equally strong as the direct channel, the power gain for 2 lines (one line creating constructive crosstalk to the other) is 6 dB and the power gain for 4 lines is 12 dB, while the transmit power is increased by 3 dB and 6 dB, respectively. The crosstalk level can be very high in DSL, especially in higher frequencies. Therefore, it is expected to achieve considerable power gain over multi-line channels by exploiting the crosstalk channel gain, as previously described.

Henceforth, the term "coherent transmission scheme" will be used as referring to a scheme where transmission on one or more DSL lines, $L_O$ is adjusted such as to create constructive interference/crosstalk to a certain other DSL line, $L_D$. The transmission resulting in that a desired direct signal over $L_D$ is received in phase/coherence with the signal from the crosstalk channel from $L_O$ will be referred to as "coherent transmission". Further, the term "coherent transmission system" or "coherent transmission set" will be used as referring to an arrangement comprising a "master" or "main" DSL line, $L_D$, and a set of one or more other DSL lines $L_O$, which are used for creating constructive crosstalk to a signal on the line $L_D$.

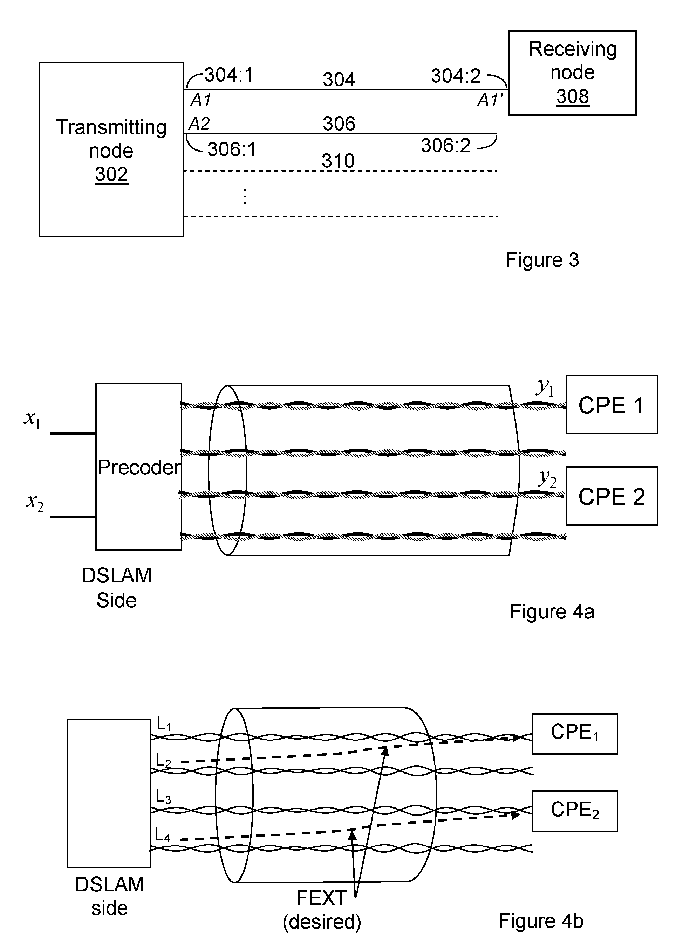

At the presence of more than one coherent transmission system in a DSL system, or e.g. one coherent transmission system and one or more single line transmission system (i.e. a direct DSL line which is not supported by constructive crosstalk from other DSL lines), vectoring can be used to cancel out the crosstalk between the different systems. Figure 4b illustrates a DSL system comprising two coherent transmission systems: a first coherent transmission system comprising DSL lines $L_1$ and $L_2$, and a second coherent transmission system comprising DSL lines $L_3$ and $L_4$. DSL line $L_1$ is connected to a first CPE, $CPE_1$, and DSL line $L_3$ is connected to a second CPE, $CPE_2$. DSL lines $L_2$ and $L_4$ are assumed to be available for coherent transmission. The lines $L_2$ and $L_4$ could be idle/unconnected at the far end, or, could alternatively be connected e.g. to a respective CPE or similar equipment, which is not in use, or used e.g. only in part(s) of the frequency spectrum.

In figure 4b, lines $L_1$ and $L_2$ are used for a signal intended for $CPE_1$, while lines $L_3$ and $L_4$ are used for a signal intended for $CPE_2$. However, there will also be unwanted crosstalk, e.g. from $L_3$ and $L_4$ to $L_1$ and $L_2$. Vectoring may be used to cancel such unwanted crosstalk between e.g. a first and a second coherent transmission system. The transmission over the DSL lines illustrated in figure 4b should thus be adjusted, preferably by use of a so-called precoder, such that power gain from constructive crosstalk is achieved within the first and second coherent transmission system, while unwanted crosstalk between the first and second coherent transmission system is cancelled out. This combination of constructive addition of signals and cancelling of unwanted crosstalk can be achieved e.g. by combining MRC (Maximum Ratio Combining) and ZF (Zero-forcing) techniques.

A precoder, P, to be used in a transmitter node in a DSL system for constructive addition and cancelling of unwanted crosstalk as described above, could be regarded as comprising two parts, $P_C$ and $P_V$, as:

$$\mathbf{P} = \mathbf{P}_c \mathbf{P}_v \tag{5}$$

where $\mathbf{P}_c$ denotes a combining matrix for coherent transmission and $\mathbf{P}_v$ denotes a vectoring matrix for crosstalk cancellation.

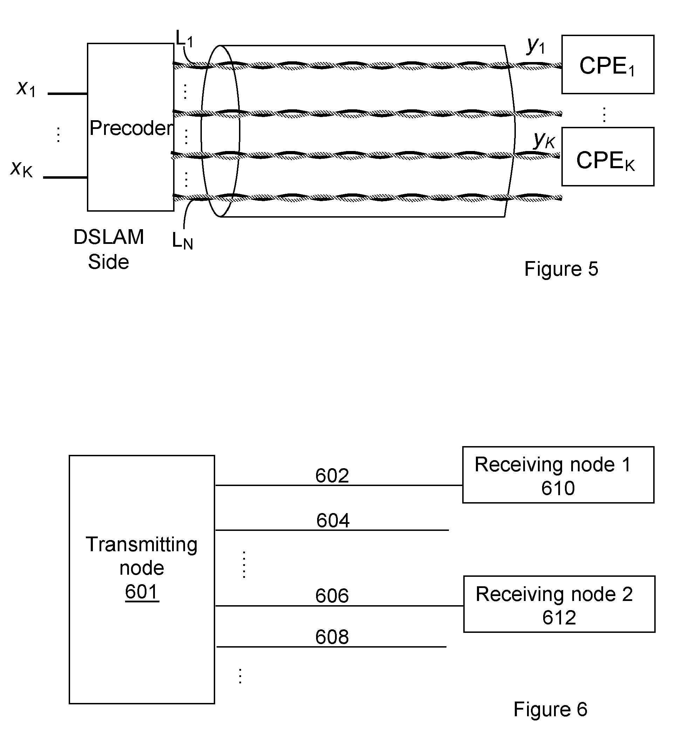

Assume an N -line system, as illustrated in figure 5, where there are K coherent transmission systems intended for a respective one of K CPEs, where the $i^{th}$ coherent transmission system comprises/transmits on $N_i$ lines. The received signal vector at one tone at the CPE side can then be modeled as

$$\mathbf{y} = \mathbf{HP}_c\mathbf{P}_v\mathbf{x} + \mathbf{n} \qquad (6)$$

where $\mathbf{y} = [y_1\ y_2\ \cdots\ y_K]^T$ in which $y_i$ denotes the received signal at CPE $i$ ;

$\mathbf{x} = [x_1\ x_2\ ...\ x_K]^T$ is the transmit signal vector before the precoder, where $x_i$ denotes the signal destined for CPE $i$ ;

$\mathbf{P}_v$ is a KxK square matrix for vectoring;

$\mathbf{P}_c$ is a $N \times K$ matrix for coherent transmissions; $\mathbf{H}$ is the channel matrix which is a $K \times N$ matrix where the element at row $i$ and column $j$, $h_{ij}$, denotes the channel coefficient from the transmitter at line j to the receiver at line $i$, and

$\mathbf{n} = [n_1\ n_2\ ...\ n_K]^T$ is the noise vector at the CPE side in which $n_i$ denotes the noise (e.g. thermal noise) at CPE $i$.

In order to achieve a power gain to a desired signal by contribution from constructive crosstalk, the element $p_{ij}^c$, at row $i$ and column j of the combing matrix $\mathbf{P}_c$, can be set as:

$$p_{ij}^c = \begin{cases} \dfrac{h_{ji}^*}{|h_{ji}|} & \text{if } x_j \text{ is transmitted on line } i. \\ 0 & \text{otherwise} \end{cases} \qquad (7)$$

To cancel out the crosstalk between the signals intended for different CPEs, the vectoring matrix $\mathbf{P}_v$ can be configured as

$$\mathbf{P}_v = \frac{1}{\beta}\tilde{\mathbf{H}}^{-1}\tilde{\mathbf{H}}_d \qquad (8)$$

where $\tilde{\mathbf{H}} = \mathbf{HP}_c$ is defined as the equivalent channel for vectoring; $\tilde{\mathbf{H}}_d$ is the diagonal matrix of $\tilde{\mathbf{H}}$, and $\beta$ is the power normalization factor which can be set as:

$$\beta = \max_i \left\| \left[ \tilde{\mathbf{H}}^{-1}\tilde{\mathbf{H}}_d \right]_{row\,i} \right\| \qquad (9)$$

where $\|[\mathbf{A}]_{row\,i}\|$ denotes the Euclidean norm of the $i^{th}$ row vector of **A**. This vectoring precoder may also be referred to as a normalized diagonal precoder. In this way, a similar gain as shown in equation (4) can be achieved in a vectored coherent transmission system.

Figure 8a shows a diagram of the measured channel of a 22 lines, 0.5 mm, 200 meters cable. In figure 8a it can be seen that the crosstalk channels get closer to the direct channel as frequency increases, which indicates that the power gain from coherent transmission will probably increase with increased frequency.

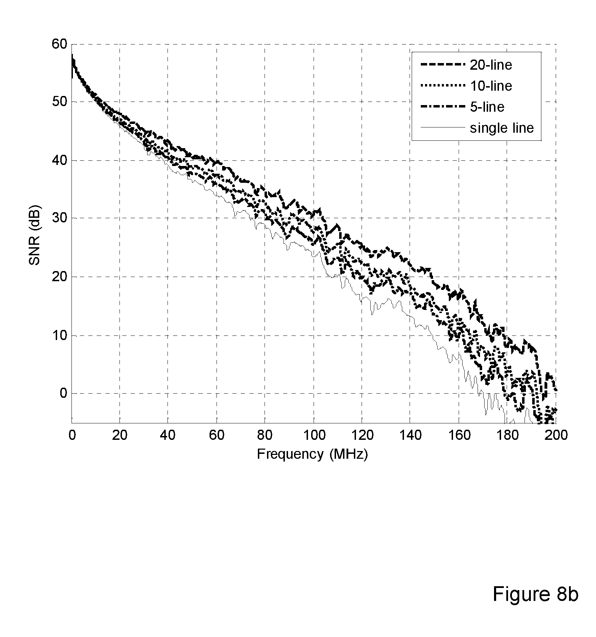

Figure 8b shows the simulated SNR achieved by "coherent transmission" on a different number of lines on the 200 meters cable illustrated in figure 8a. In the simulation, it was assumed -80 dBm/Hz signal PSD (Power Spectral Density) and -140 dBm/Hz noise floor. The results illustrated in figure 8b show that significant SNR gain can be achieved by coherent transmission, especially at higher frequencies and with more lines, which is consistent with (4).

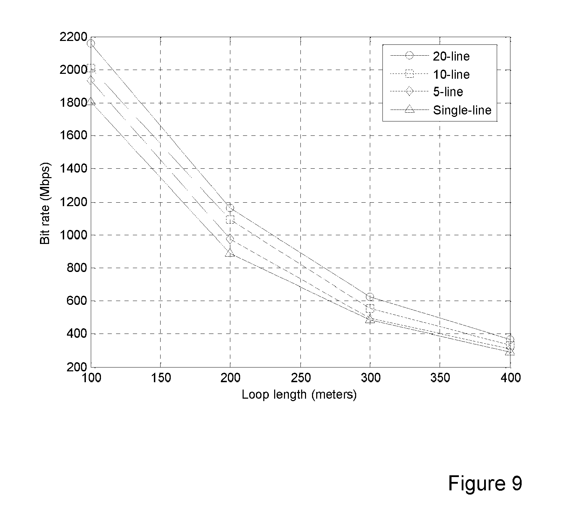

Figure 9 shows the bit rate reach performance of a coherent transmission system when comprising/utilizing a different number of lines. It can be seen in figure 9 that significant capacity gain can be achieved by coherent transmission, especially for loops up to 200m. The absolute capacity gain gets reduced as loop length increases.

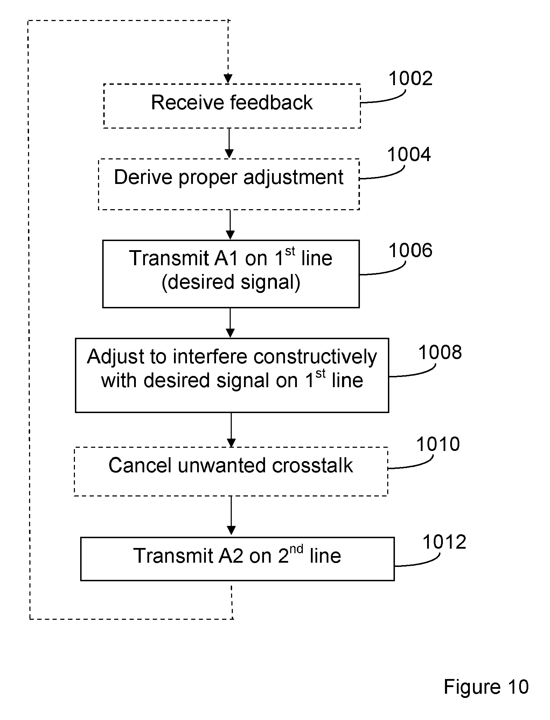

Exemplifying procedure embodiment, figure 10

An exemplifying embodiment of the procedure for coherent transmission will be described below, with reference to figure 10 (and also supported by references to figure 3). The procedure is suitable for use in a transmitting node connected to a number of DSL lines in association with a DSLAM in an xDSL system. Said transmitting node is assumed to be connected to a respective first end 304:1, 306:1 of a first and a second digital subscriber line, 304 and 306. A second end 304:2 of the first line is assumed to be connected to a first receiving node 308, such as a CPE.

The procedure for coherent transmission involves the transmission of a first signal A1 over a first DSL line in an action 1006. The signal A1 comprises e.g. user data destined/intended for a receiving node connected to the first DSL line. Further, a second signal A2 is transmitted over a second DSL line in an action 1012. The second signal A2 is related to the first signal A1. Preferably, A2 comprises part of a scaled version of A1, e.g. for some frequencies. Further, the transmission of the second signal A2 over the second DSL line is adjusted in an action 1008, such that a contribution from the second signal A2 interferes constructively with the signal A1' at the second end 304:2 of the first line 304. A1' is the signal A1 after propagation through the first DSL line, i.e. an attenuated, phase-shifted and delayed version of A1, further comprising additive noise and possibly other types of distortion.

The signal A2 could be regarded as a signal comprising only the information which will result in the intended constructive crosstalk to the first line, e.g. a part of the information comprised in the signal A1. With such a definition, a "total" signal transmitted on the second line could comprise other signal components than A2.

The contribution from the second signal A2, which is to interfere constructively with the signal A1' at the second/far end of the first line, is primarily intended to be crosstalk related to the second signal A2 from the second line 306 to the first line 304. However, the contribution could also, in some embodiments, be a more direct signal, as previously described. For the contribution from the second signal A2 to be of more direct character than crosstalk, the second line could be arranged to be e.g. in physical contact with the first line, by e.g. being connected to the same port of the first receiving node as the first line.

However, the second line is more likely not to be connected to the first receiving node, but to be connected e.g. to a second receiving node, such as a CPE; to a plain old telephone, or, not to be connected to any receiving equipment at all (idle). The second line could alternatively be connected to a second port of the first receiving node.

The adjusting of the transmission of the signal A2 over the second DSL line is based on knowledge of/information on the crosstalk channel from the second line to the first line. Such information could be obtained e.g. by receiving feedback from the first receiving node in an action 1002. The feedback could be of the same type as the feedback according e.g. to the vectoring standard. Such feedback is, or will be, available in many DSL systems, and would therefore not necessarily need to be especially obtained or generated for the purpose of coherent transmission. In some embodiments, such as e.g. in systems using TDD, such information could alternatively be derived from upstream communication received at the transmitting node. The proper precoder coefficients for the adjusting of the transmission of A2 over the second DSL line may be derived e.g. in an action 1004. By use of the feedback or upstream information, the crosstalk channel can be estimated. Then, the precoder coefficients can be calculated according to the estimated channel coefficients. Adaptive algorithms such as LMS (Least Mean Square) could be used to update the precoder coefficients.

The procedure for coherent transmission could also comprise cancellation of unwanted interference to the first DSL line, such as crosstalk from DSL lines not being part of the same coherent transmission system. Such unwanted crosstalk could be cancelled by use of vectoring, e.g. in an action 1010, which could be integrated with the action 1008 of adjusting the transmission in order to achieve constructive interference.

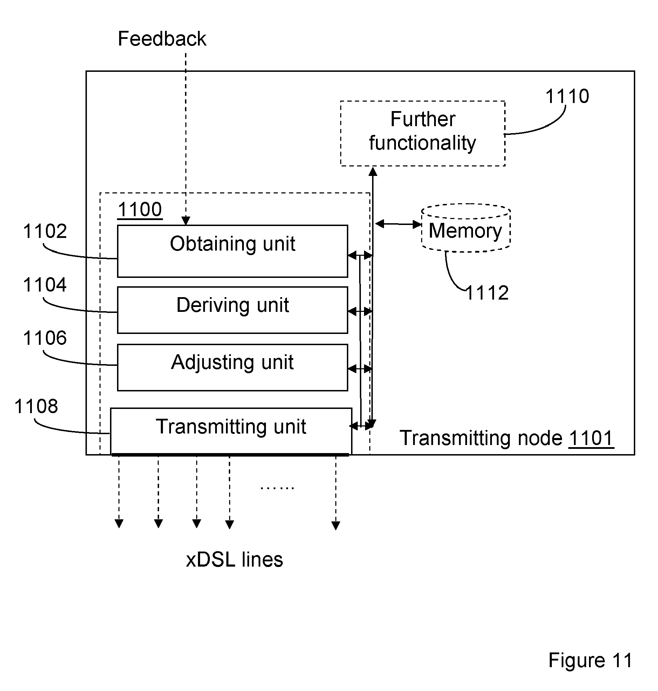

Exemplifying node embodiment, figure 11

Below, an exemplifying transmitter node 1101, adapted to perform the above described procedure for coherent transmission will be described with reference to figure 11. The transmitter node is connectable to a respective first end of a number of DSL lines and suitable for use in an xDSL system in association with a DSLAM. Said transmitting node is assumed to be connectable to a respective first end 304:1, 306:1 of a first and a second digital subscriber line, 304 and 306. A second end 304:2 of the first line is assumed to be connected to a first receiving node 308, such as a CPE.

The part of the transmitter node which is adapted for enabling the performance of the above described procedure is illustrated as an arrangement 1100, surrounded by a dashed line. The transmitter node may further comprise other functional units 1110, such as e.g. receivers and codecs, and may further comprise one or more storage units 1112.

The transmitter node 1101, and/or the arrangement 1100, could be implemented e.g. by one or more of: a processor or a micro processor and adequate software, a Programmable Logic Device (PLD) or other electronic component(s)/processing circuit(s) configured to perform the actions mentioned above.

The transmitter node is illustrated as comprising an obtaining unit 1102, adapted to receive e.g. feedback from another node and/or the result of measurements on upstream communication. Alternatively, some other unit comprised in the transmitter node may be adapted to receive/derive such information, or, some unit comprised in the transmitter node may already be capable of receiving or deriving such information.

Further, the transmitting node is illustrated as comprising a deriving unit 1104, adapted to derive the correct adjustment to be subjected to a signal to be transmitted over a DSL line in order to achieve a contribution which adds constructively to a direct signal on another DSL line. For example, the appropriate coefficients for a precoder to be used on the signal to be transmitted could be derived.

The transmitter node comprises an adjusting unit 1106, which is adapted to adjust the transmission of the second signal A2 on the second line such that a contribution from the second signal A2 interferes constructively with the signal A1' at the second/far end of the first line. Preferably, the adjustment is performed by use of a precoder comprising coefficients, which are applied to the signal to be transmitted on the second line. The adjustment unit could be a precoder. The transmission on each tone or a subset of tones on the second DSL line could be subjected to a respective coefficient of a precoder matrix. The adjustment could be performed in a predefined frequency interval, such as e.g. 30-300MHz. The adjustment unit could further be adapted to derive the correct adjustment to be subjected to the signal to be transmitted, based e.g. on feedback or other information from a far end node.

The transmitter node further comprises a transmitting unit 1108, adapted to transmit a first signal A1 on the first line; and to transmit a second signal A2 on the second line, the second signal A2 being related to the first signal A1. The relation may be that the signals transmitted on a corresponding tone on the first and second DSL line are based on the same data signal. There are times when the signals transmitted on the first and second DSL line could be different or even orthogonal, at least in some frequencies, such as during transmission of non-data signals like pilot or reference signals.

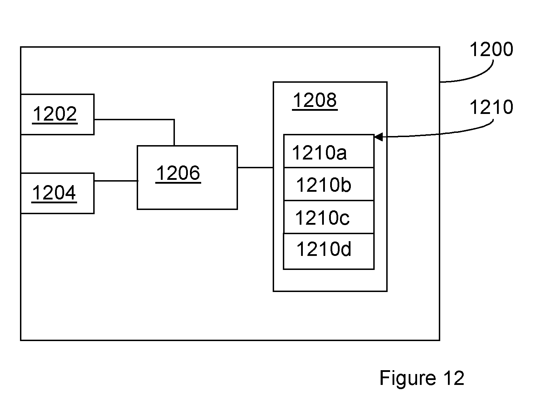

Exemplifying arrangement, figure 12

Figure 12 schematically shows an embodiment of an arrangement 1200 in a transmitting node, which also can be an alternative way of disclosing an embodiment of the arrangement in a network node illustrated in figure 11. Comprised in the arrangement 1200 are here a processing unit 1206, e.g. with a DSP (Digital Signal Processor). The processing unit 1206 may be a single unit or a plurality of units to perform different actions of procedures described herein. The arrangement 1200 may also comprise an input unit 1202 for receiving signals from other entities, and an output unit 1204 for providing signal(s) to other entities. The input unit 1202 and the output unit 1204 may be arranged as an integrated entity.

Furthermore, the arrangement 1200 comprises at least one computer program product 1208 in the form of a non-volatile memory, e.g. an EEPROM (Electrically Erasable Programmable Read-Only Memory), a flash memory and a hard drive. The computer program product 1208 comprises a computer program 1210, which comprises code means, which when executed in the processing unit 1206 in the arrangement 1200 causes the arrangement and/or the transmitting node to perform the actions e.g. of the procedure described earlier in conjunction with figure 10.

The computer program 1210 may be configured as a computer program code structured in computer program modules. Hence, in an exemplifying embodiment, the code means in the computer program 1210 of the arrangement 1200 comprises a transmitting module 1210a for transmitting a first signal on a first DSL line, and a second signal on a second DSL line. The computer program further comprises an adjusting module 1210b for adjusting the transmission of the second signal A2 on the second line such that a contribution from the second signal A2 interferes constructively with a signal A1' at a second end of the first line (where the signal A1' represents the signal A1 having propagated through the first line) The computer program 1210 could further comprise other modules, such as an obtaining module 1210c and/or a deriving module 1210d, for providing other desired functionality.

The modules 1210a-d could essentially perform the actions of the flow illustrated in figure 10, to emulate the arrangement in a transmitting node illustrated in figure 11. In other words, when the different modules 1210a-d are executed in the processing unit 1206, they may correspond to the units 1102-1108 of figure 11.

Although the code means in the embodiment disclosed above in conjunction with figure 12 are implemented as computer program modules which when executed in the processing unit causes the arrangement and/or network node to perform the actions described above in the conjunction with figures mentioned above, at least one of the code means may in alternative embodiments be implemented at least partly as hardware circuits.

The processor may be a single CPU (Central Processing Unit), but could also comprise two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in alternative embodiments be distributed on different computer program products in the form of memories within the transmitter node.

It is to be understood that the choice of interacting units or modules, as well as the naming of the units are only for exemplifying purpose, and nodes suitable to execute any of the methods described above may be configured in a plurality of alternative ways in order to be able to execute the suggested process actions.

It should also be noted that the units or modules described in this disclosure are to be regarded as logical entities and not with necessity as separate physical entities.

As previously described, coherent transmission could be used e.g. for extending the reach and improving the capacity on the lines which are provided with constructive contributions from neighboring DSL lines. Spare DSL lines could be used for creating constructive interference to other DSL lines. For example, in some countries, the POTS network comprises two DSL lines to each potential subscriber, of which one is typically idle.

Further, coherent transmission could be used in mobile backhaul. In mobile backhaul, bonded DSL lines are usually used to increase the backhaul capacity and robustness. Multi-port bonding CPEs are used for bonded DSL lines. Each port of a bonding CPE could be regarded and treated as a single port CPE and coherent transmission could be used to improve e.g. the capacity of each port.

Further, DSL lines which are connected to a receiving node, but which are not presently used, or only used in a certain frequency band, due e.g. to customer activity, subscription, customer equipment, or due to that a user powers down the CPE when not in use, could be used for coherent transmission in frequencies currently unused by a DSL or POTS customer.

Typically, "short" DSL lines or loops have better capacity, e.g. bit rate, than longer DSL lines or loops. By use of coherent transmission, such differences in capacity may be balanced, e.g. by that certain frequencies on the shorter lines are used for creating constructive crosstalk to the longer lines, and thus increasing the capacity in the longer lines in said frequencies. The frequencies used for creating such crosstalk to longer lines could then not be used for communication over the shorter lines, which are thus "deprived" of capacity.

The increase in received power of a desired signal achieved by coherent transmission improves the quality of the desired signal. Therefore, it could, as previously stated, be used for extending reach and/or improving capacity. Alternatively, or in addition, the signal quality improvement could also be used to improve stability.

While the invention has been described with reference to specific example embodiments, the description is in general only intended to illustrate the inventive concept and should not be taken as limiting the scope of the invention. The different features of the exemplifying embodiments above may be combined in different ways according to need, requirements or preference.

**Claims**

1.  Method in a transmitting node (302, 1101) connected to a respective first end (304:1, 306:1) of a first (304) and a second (306) digital subscriber line, a second end (304:2) of the first line being connected to a first receiving node (308), the method comprising:

    - transmitting (1006) a first signal A1 on the first line (304);
    - transmitting (1008) a second signal A2 on the second line (306), the second signal A2 being related to the first signal A1, and
    - adjusting (1010) the transmission of the second signal A2 on the second line (306) such that a contribution from the second signal A2 interferes constructively with a signal A1' at the second end (304:2) of the first line (304), where the signal A1' represents the signal A1 having propagated through the first line, **characterized in that** the method further comprises galvanically connecting or non-galvanically coupling the first line with the second line.

2.  Method according to claim 1, wherein the contribution from the second signal A2 is crosstalk related to the second signal A2 from the second line (306) to the first line (304).

3.  Method according to claim 1 or 2, wherein the adjusting is performed by use of precoding.

4.  Method according to any of claims 1-3, wherein the first signal A1 and the second signal A2 at least partly comprise the same information.

5.  Method according to any of the preceding claims, wherein the second signal A2 is transmitted using at least one sub-carrier on the second line and the contribution from the second signal A2 interferes constructively with the signal A1' on the corresponding at least one sub-carrier on the first line.

6.  Method according to any of the preceding claims, wherein a/the second end (306:2) of the second line (306) is not connected to the first receiving node (308).

7.  Method according to any of the preceding claims, wherein a/the second end (306:2) of the second line (306) is connected to a second receiving node.

8. Method according to any of the preceding claims, wherein the adjusting of the transmission of the second signal A2 on the second line (306) is based on at least one of:

- feedback received from the first receiving node (308);
- upstream communication from the first receiving node (308)

9. Method according to any of the preceding claims, further comprising:

- cancelling crosstalk to the first line from communication on a third line connected to the transmitting node.

10. Method according to claim 9, wherein the crosstalk is cancelled by use of vectoring.

11. Transmitting node (1101) for digital subscriber lines, connectable to a respective first end of at least a first and a second digital subscriber line, said transmitting node comprising:

- a transmitting unit (1108), adapted to transmit a first signal A1 on the first line; and to transmit a second signal A2 on the second line, the second signal A2 being related to the first signal A1; and
- an adjusting unit (1106), adapted to adjust the transmission of the second signal A2 on the second line such that a contribution from the second signal A2 interferes constructively with a signal A1' at the second end of the first line, where the signal A1' represents the signal A1 having propagated through the first line, **characterized in that** the transmitting node is arranged to galvanically connect or non-galvanically couple the first line with the second line.

12. Transmitting node according to claim 11, where the contribution from the second signal A2 is crosstalk related to the second signal A2 from the second line to the first line.

13. Transmitting node according to claim 11 or 12, further adapted to transmit the second signal A2 on at least one sub-carrier on the second line.

14. Transmitting node according to any of claims 11-13, adapted to base the adjustment of the transmission of the second signal A2 on the second line on at least one of:

- feedback received from a first receiving node connected to the second end of the first line;
- upstream communication from a first receiving node connected to the second end of the first line.

15. Transmitting node according to any of claims 11-14, wherein the adjusting unit (1108) is a precoder.

16. Transmitting node according to any of claims 11-15, further adapted to cancel crosstalk to the first line from communication on a third line connected to the transmitting node.

17. Transmitting node according to claim 16, further adapted to cancel the crosstalk by use of vectoring.

**Patentansprüche**

1. Verfahren in einem Übertragungsknoten (302, 1101), der mit einem entsprechenden ersten Ende (304:1, 306:1) von einer ersten (304) und einer zweiten (306) digitalen Teilnehmerleitung verbunden ist, wobei ein zweites Ende (304:2) von der ersten Leitung mit einem ersten Empfangsknoten (308) verbunden ist, das Verfahren umfassend:

- Übertragen (1006) eines ersten Signals A1 über die erste Leitung (304);
- Übertragen (1008) eines zweiten Signals A2 über die zweite Leitung (306), wobei das zweite Signal A2 mit dem ersten Signal A1 in Verbindung steht, und
- Anpassen (1010) der Übertragung von dem zweiten Signal A2 über die zweite Leitung (306), so dass ein Beitrag von dem zweiten Signal A2 konstruktiv mit einem Signal A1' an dem zweiten Ende (304:2) von der ersten Leitung (304) interferiert, wobei das Signal A1' das durch die erste Leitung propagierte Signal A1 darstellt, **dadurch gekennzeichnet, dass** das Verfahren weiter galvanisch Verbinden oder nicht galvanisch Koppeln der ersten Leitung mit der zweiten Leitung umfasst.

2. Verfahren nach Anspruch 1, wobei der Beitrag von dem zweiten Signal A2 ein Übersprechen bezogen auf das zweite Signal A2 von der zweiten Leitung (306) zu der ersten Leitung (304) ist.

3. Verfahren nach Anspruch 1 oder 2, wobei das Anpassen unter Verwendung von Vorcodierung durchgeführt wird.

4. Verfahren nach einem der Ansprüche 1- 3, wobei das erste Signal A1 und das zweite Signal A2 zumindest teilweise dieselben Informationen umfassen.

5. Verfahren nach einem der vorangegangenen Ansprüche, wobei das zweite Signal A2 unter Verwendung wenigstens eines Unterträgers über die zweite Leitung übertragen wird und der Beitrag von dem zweiten Signal A2 konstruktiv mit dem Signal A1' auf dem korrespondierenden wenigstens einen Unterträger auf der ersten Leitung interferiert.

6. Verfahren nach einem der vorangegangenen Ansprüche, wobei ein/das zweite Ende (306:2) von der zweiten Leitung (306) nicht mit dem ersten Empfangsknoten (308) verbunden ist.

7. Verfahren nach einem der vorangegangenen Ansprüche, wobei ein/das zweite Ende (306:2) von der zweiten Leitung (306) mit einem zweiten Empfangsknoten verbunden ist.

8. Verfahren nach einem der vorangegangenen Ansprüche, wobei das Anpassen der Übertragung von dem zweiten Signal A2 über die zweite Leitung (306) basierend ist auf wenigstens einem von:

   - einer von dem ersten Empfangsknoten (308) empfangenen Rückmeldung;
   - Aufwärtsverbindungskommunikation von dem ersten Empfangsknoten (308).

9. Verfahren nach einem der vorangegangenen Ansprüche, weiter umfassend:

   - Auslöschen von Übersprechen auf der ersten Leitung von Kommunikation auf einer dritten Leitung, die mit dem Übertragungsknoten verbunden ist.

10. Verfahren nach Anspruch 9, wobei das Übersprechen unter Verwendung von Vektorisierung ("vectoring") ausgelöscht wird.

11. Übertragungsknoten (1101) für digitale Teilnehmerleitungen, der mit einem entsprechenden ersten Ende von wenigstens einer ersten und einer zweiten digitalen Teilnehmerleitung verbunden werden kann, wobei der besagte Übertragungsknoten umfasst:

   - eine Übertragungseinheit (1108), die dazu angepasst ist, ein ersten Signal A1 auf der ersten Leitung zu übertragen, und ein zweites Signal A2 auf der zweiten Leitung zu übertragen, wobei das zweite Signal A2 mit dem ersten Signal A1 in Verbindung steht; und
   - eine Anpassungseinheit (1106), die dazu angepasst ist, die Übertragung von dem zweiten Signal A2 auf der zweiten Leitung anzupassen, so dass ein Beitrag von dem zweiten Signal A2 konstruktiv mit einem Signal A1' an dem zweiten Ende von der ersten Leitung interferiert, wobei das Signal A1' das durch die erste Leitung propagierte Signal A1 darstellt, **dadurch gekennzeichnet, dass** der Übertragungsknoten dazu eingerichtet ist, die erste Leitung galvanisch mit der zweiten Leitung zu verbinden oder die erste Leitung nicht galvanisch mit der zweiten Leitung zu koppeln.

12. Übertragungsknoten nach Anspruch 11, wobei der Beitrag von dem zweiten Signal A2 ein Übersprechen bezogen auf das zweite Signal A2 von der zweiten Leitung zu der ersten Leitung ist.

13. Übertragungsknoten nach Anspruch 11 oder 12, weiter dazu angepasst, das zweite Signal A2 auf wenigstens einem Unterträger auf der zweiten Leitung zu übertragen.

14. Übertragungsknoten nach einem der Ansprüche 11 - 13, dazu angepasst, die Anpassung der Übertragung von dem zweiten Signal A2 auf der zweiten Leitung auf wenigstens einem von dem Folgenden zu basieren:

   - einer von einem ersten Empfangsknoten, der mit dem zweiten Ende der ersten Leitung verbunden ist, empfangenen Rückmeldung;
- Aufwärtsverbindungskommunikation von einem ersten Empfangsknoten, der mit dem zweiten Ende der ersten Leitung verbunden ist.

**15.** Übertragungsknoten nach einem der Ansprüche 11 - 14, wobei die Anpassungseinheit (1108) ein Vorcodierer ist.

**16.** Übertragungsknoten nach einem der Ansprüche 11 - 15, weiter dazu angepasst, Übersprechen auf der ersten Leitung von Kommunikation auf einer dritten Leitung, die mit dem Übertragungsknoten verbunden ist, auszulöschen.

**17.** Übertragungsknoten nach Anspruch 16, weiter dazu angepasst, das Übersprechen unter Verwendung von Vektorisierung ("vectoring") auszulöschen.

## Revendications

**1.** Procédé dans un noeud d'émission (302, 1101) relié à une première extrémité respective (304:1, 306:1) d'une première (304) et d'une deuxième (306) ligne numérique d'abonné, une seconde extrémité (304:2) de la première ligne étant reliée à un premier noeud de réception (308), le procédé comprenant :

   - l'émission (1006) d'un premier signal A1 sur la première ligne (304) ;
   - l'émission (1008) d'un second signal A2 sur la deuxième ligne (306), le second signal A2 étant lié au premier signal A1, et
   - l'ajustement (1010) de l'émission du second signal A2 sur la deuxième ligne (306) de sorte qu'une contribution du second signal A2 s'immisce de manière constructive avec un signal A1' au niveau de la seconde extrémité (304:2) de la première ligne (304), où le signal A1' représente le signal A1 s'étant propagé à travers la première ligne, **caractérisé en ce que** le procédé comprend en outre la connexion de manière galvanique ou le couplage de manière non galvanique de la première ligne à la deuxième ligne.

**2.** Procédé selon la revendication 1, dans lequel la contribution du second signal A2 est une diaphonie liée au second signal A2 de la deuxième ligne (306) à la première ligne (304).

**3.** Procédé selon la revendication 1 ou 2, dans lequel l'ajustement est effectué par l'utilisation de précodage.

**4.** Procédé selon l'une quelconque des revendications 1 à 3, dans lequel le premier signal A1 et le second signal A2 comprennent au moins en partie la même information.

**5.** Procédé selon l'une quelconque des revendications précédentes, dans lequel le second signal A2 est émis en utilisant au moins une sous-porteuse sur la deuxième ligne et la contribution du second signal A2 s'immisce de manière constructive avec le signal A1' sur l'au moins une sous-porteuse correspondante sur la première ligne.

**6.** Procédé selon l'une quelconque des revendications précédentes, dans lequel une / la seconde extrémité (306:2) de la deuxième ligne (306) n'est pas reliée au premier noeud de réception (308).

**7.** Procédé selon l'une quelconque des revendications précédentes, dans lequel une / la seconde extrémité (306:2) de la deuxième ligne (306) est reliée à un second noeud de réception.

**8.** Procédé selon l'une quelconque des revendications précédentes, dans lequel l'ajustement de l'émission du second signal A2 sur la deuxième ligne (306) est basé sur au moins une de :

   - rétroaction reçue en provenance du premier noeud de réception (308) ;
   - communication amont provenant du premier noeud de réception (308).

**9.** Procédé selon l'une quelconque des revendications précédentes, comprenant en outre :

   - l'annulation de diaphonie sur la première ligne provenant d'une communication sur une troisième ligne reliée au noeud d'émission.

**10.** Procédé selon la revendication 9, dans lequel la diaphonie est annulée par l'utilisation de vectorisation.

**11.** Noeud d'émission (1101) pour des lignes numériques d'abonné, pouvant être reliées à une première extrémité respective d'au moins une première et une deuxième ligne numérique d'abonné, ledit noeud d'émission comprenant :

- une unité d'émission (1108), conçue pour émettre un premier signal A1 sur la première ligne ; et pour émettre un second signal A2 sur la deuxième ligne, le second signal A2 étant lié au premier signal A1 ; et
- une unité d'ajustement (1106), conçue pour ajuster l'émission du second signal A2 sur la deuxième ligne de sorte qu'une contribution du second signal A2 s'immisce de manière constructive avec un signal A1' au niveau de la seconde extrémité de la première ligne, où le signal A1' représente le signal A1 s'étant propagé à travers la première ligne, **caractérisé en ce que** le noeud d'émission est agencé pour connecter de manière galvanique ou coupler de manière non galvanique la première ligne à la deuxième ligne.

**12.** Noeud d'émission selon la revendication 11, où la contribution du second signal A2 est une diaphonie liée au second signal A2 de la deuxième ligne à la première ligne.

**13.** Noeud d'émission selon la revendication 11 ou 12, conçu en outre pour émettre le second signal A2 sur au moins une sous-porteuse sur la deuxième ligne.

**14.** Noeud d'émission selon l'une quelconque des revendications 11 à 13, conçu pour baser l'ajustement de l'émission du second signal A2 sur la deuxième ligne sur au moins une de :

- rétroaction reçue d'un premier noeud de réception relié à la seconde extrémité de la première ligne ;
- communication amont provenant d'un premier noeud de réception relié à la seconde extrémité de la première ligne.

**15.** Noeud d'émission selon l'une quelconque des revendications 11 à 14, dans lequel l'unité d'ajustement (1108) est un précodeur.

**16.** Noeud d'émission selon l'une quelconque des revendications 11 à 15, conçu en outre pour annuler la diaphonie sur la première ligne provenant d'une communication sur une troisième ligne reliée au noeud d'émission.

**17.** Noeud d'émission selon la revendication 16, conçu en outre pour annuler la diaphonie par l'utilisation de vectorisation.

102

L$_1$

L$_2$

L$_N$

CPE$_1$

CPE$_K$

DSLAM
side

Figure 1a

102

L$_1$

L$_2$

L$_N$

CPE$_1$

CPE$_K$

DSLAM
side

FEXT
channel

Figure 1b

L$_1$

$y$

$x$

Precoder

CPE

L$_N$

DSLAM
Side

FEXT
Channel

Figure 2

Figure 3

Figure 4a

Figure 4b

$x_1$

$x_K$

Precoder

$L_1$

$y_1$

CPE$_1$

$y_K$

CPE$_K$

DSLAM
Side

$L_N$

Figure 5

Transmitting
node
601

602

Receiving node 1
610

604

606

Receiving node 2
612

608

Figure 6

Transmitting
node/
DSLAM side

$L_D$

$L_O$

Coupling
device

$L_D$

$L_O$

Receiving
node

Figure 7

Direct channel

21 FEXT channels

Figure 8a

Figure 8b

Figure 9

Receive feedback — 1002

Derive proper adjustment — 1004

Transmit A1 on 1$^{st}$ line
(desired signal) — 1006

Adjust to interfere constructively
with desired signal on 1$^{st}$ line — 1008

Cancel unwanted crosstalk — 1010

Transmit A2 on 2$^{nd}$ line — 1012

Figure 10

Feedback

1110

Further
functionality

1100

1102    Obtaining unit

1104    Deriving unit

Memory

1112

1106    Adjusting unit

1108    Transmitting unit

Transmitting node 1101

...

xDSL lines

Figure 11

Figure 12

**EP 2 748 935 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7142501 B1
- US 20060056499 A